# EUROPEAN PATENT APPLICATION

(11) **EP 1 889 744 A1**
(43) Date of publication of application: **20.02.2008**
(21) Application number: 07111723.8
(22) Date of filing: 04.07.2007
(51) Int. Cl.: B60N 2/14, E02F 9/16, F16L 27/00

(54) **Swivel seat with hydraulic connections**

(30) Priority: 18.08.2006 US 506475
(71) Applicant: Deere & Company, Moline, IL 61265-8098 (US)
(72) Inventor: Teijido, Joseph A., East Moline, IL 61244 (US); Volkman, Steven R, Geneseo, IL Illinois 61254 (US)
(74) Representative: Holst, Sönke

(57) **Abstract**

A swiveling seat (100) for a work vehicle, comprises an operator seat having a pedestal (110) and a seat swivel (112) having a top plate (114) on which the pedestal (110) is fixed and a bottom plate (116), wherein the top and bottom plates (114,116) are configured to swivel with respect to each other about a swivel axis (118).

It is proposed that the seat swivel (112) has a central aperture (120,122) through which the swivel axis (118) extends, at least one hydraulic line (124) extending through the central aperture (120,122), the at least one hydraulic line (124,126) including a first hydraulic swivel joint (128).

## Description

This invention relates generally to seats for work vehicles. In particular it relates to swivel seats having hydraulically adjustable components.

Work vehicles, such as agricultural machines and construction machines, including such vehicles as tractors, harvesters, road graders, backhoes, skid steer vehicles, telehandlers, and others are often provided with swivel seats to permit the operator to move to more than one working position. In recent years, many of the seats have been provided with spring loading systems, whether mechanical springs, air springs, or hydraulic springs, to make the ride for the operator more comfortable.

There are problems with the seat arrangements, such as the limited amount of room for the operator's feet, which is exacerbated by the need to provide additional connections to the seat which may include electrical wires, pneumatic lines, or hydraulic lines, to provide the springing, control the seat movement, and provide connections to additional seat features such as intelligent armrests having a plurality of controls.

Providing enough slack to permit the seat to be swiveled through a significant angle results in a tangle of cables, wires, conduits and other connections that get in the way of the operator's feet and legs.

What is needed, therefore, is an improved swivel seat base that has a central passageway for routing the various connections from the vehicle to the swiveling seat portion. It is an object of this invention to provide such a seat. This is provided by routing the operative connections through a more central passageway or aperture in the seat swivel, which permits the length of the connections to be reduced. This is enhanced by providing a swivel in the connections which reduces the twisting in the connections that (in the case of stiff connections such as hydraulic lines) can cause the seat to swivel back to its original position. It is an object of the system described herein to provide one or more of the foregoing advantages.

This object is achieved by the subject matter of claim 1. The dependent claims recite advantageous embodiments.

A swiveling seat is provided having a seat swivel with a central passageway disposed adjacent to the swivel axis of the seat and through which operative connections are carried from the seat to the vehicle. These connections may include hydraulic connections. The connections may include hydraulic swivel fittings in the hydraulic connections. The seat may be supported on a plurality of rollers. The rollers may be mounted to rotate about axes that intersect the swivel axis of the seat. The hydraulic swivel fittings may include two plates coupled together swivel about the swivel axis in which two hydraulic channels are provided that are configured to conduct two separate flows of hydraulic fluid therethrough.

An embodiment of the invention is shown in the drawings, in which:

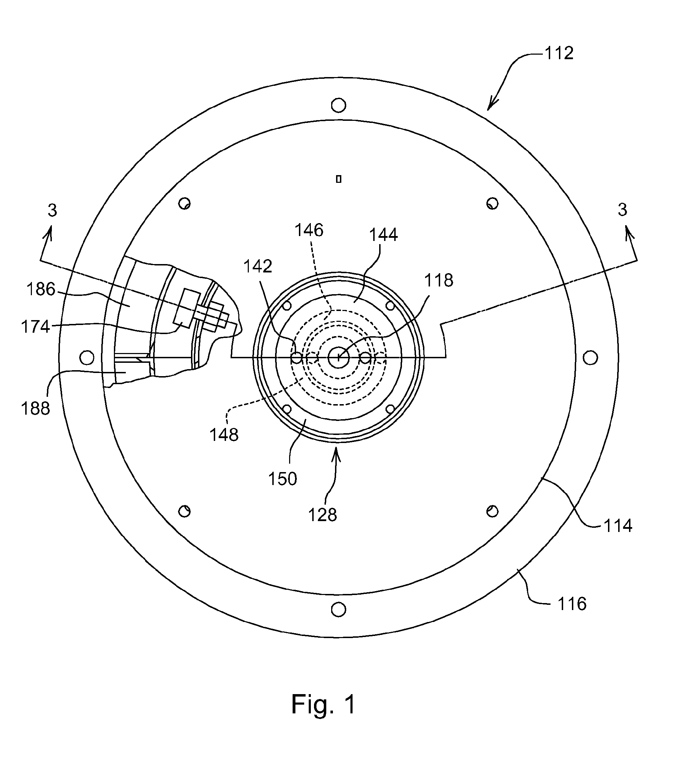

Figure 1 is a partial fragmentary plan view of a swivel seat base.
Figure 2 is a fragmentary side view of a swiveling seat using the swivel seat base of Figure 1. A hydraulic actuator for dynamically controlling the position of the seat is coupled to the seat and is driven by hydraulic fluid provided through a hydraulic swivel fitting disposed in the center of the seat.
Figure 3 is a cross-sectional view of the swivel seat base and hydraulic swivel fitting of the foregoing figures as viewed through section line 3-3 in Figure 1.

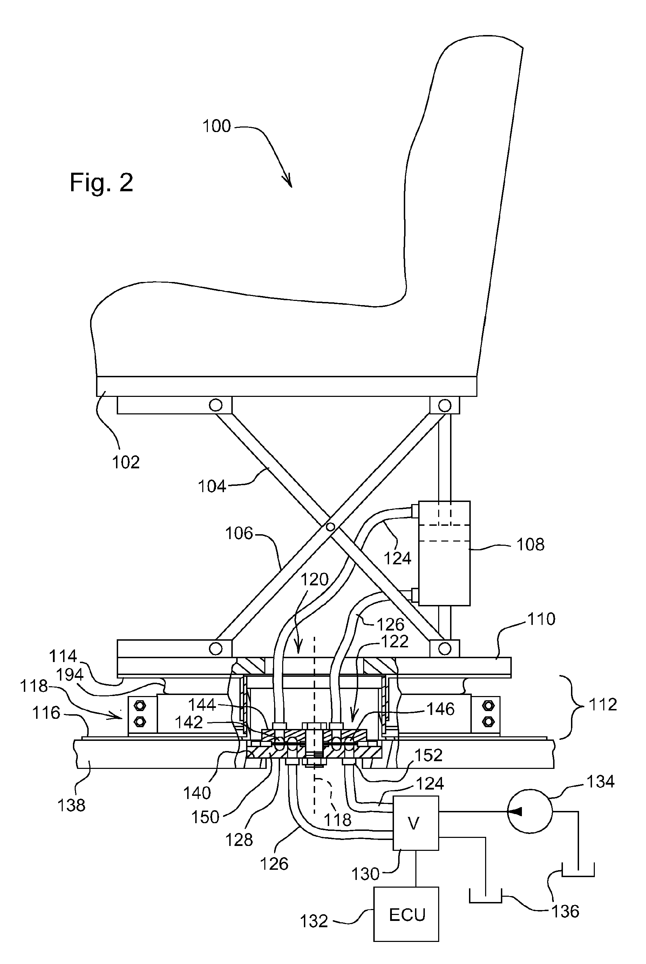

Referring now to Figure 2, a swivel seat 100 for work vehicles is shown. The seat includes an operator seat mounted on a seat base 102, which is mounted on scissor arms 104, 106. The scissor arms are arranged to raise and lower the operator seat portion of the swivel seat 100 when hydraulic cylinder 108 is extended and retracted, respectively.

Scissor arms 104, 106 are mounted on pedestal 110. Hydraulic cylinder 108 is mounted to and between seat base 102 and pedestal 110.

Pedestal 110 is mounted to seat swivel 112. Seat swivel 112 includes a top plate 114 which is coupled to a bottom plate 116 to swivel with respect thereto about a swivel axis 118 that extends vertically and perpendicular to the planar extent of top plate 114 and bottom plate 116.

A swivel mechanism 118 is disposed between and fixed to top plate 114 and bottom plate 116 to permit the top and bottom plates to swivel with respect to each other about swivel axis 118. Both the top plate 114 and the bottom plate 116 have central apertures 120, 122, respectively, through which hydraulic lines 124, 126 pass.

A hydraulic swivel coupling 128 is disposed in hydraulic lines 124, 126 to permit an upper portion of hydraulic lines 124, 126 to swivel with respect to the lower portion of hydraulic lines 124, 126 while simultaneously and continuously conducting hydraulic fluid through those hydraulic lines.

Hydraulic lines 124, 126 are coupled at one end to the retract and extend ports, respectively, of hydraulic cylinder 108. Hydraulic lines 124, 126 are coupled at their other ends to electronic control valve 130, which is configured to control the flow to and from hydraulic cylinder 108.

Electronic control unit (ECU) 132 is coupled to electronic control valve 130 to open and close the valve according to an internal computer algorithm. Opening and closing valve 130 selectively sends hydraulic fluid from a hydraulic fluid source 134 to the cylinder 108 and sends hydraulic fluid from the cylinder 108 to hydraulic fluid reservoir 136. ECU 132 is preferably a digital microcontroller controlled by internal digital computer instructions stored in a memory of the ECU that dynamically raises and lowers seat 100 during operation to provide a cushioned ride for the operator sitting in seat 100. The particular construction of ECU 132 and the instructions are not the subject of this invention and therefore are not described in detail.

Bottom plate 116 is mounted on the floor 138 of the vehicle. Floor 138 has an aperture 140 which receives and supports hydraulic swivel coupling 128 for swiveling concentric with the swivel axis 118 of seat 100 that is defined by seat swivel 112. Aperture 140 also passes hydraulic lines 124, 126 from valve 130 and ECU 132 disposed beneath the floor to hydraulic cylinder 108 disposed above the floor.

Referring now to Figures 2-3, the upper portion of hydraulic line 124 extending from the hydraulic cylinder 108 to the seat base is coupled to port 142 in upper plate 144 of hydraulic swivel coupling 128. Port 142 is in fluid communication with a circular recess 146 formed in the bottom of upper plate 144 that is concentric with swivel axis 118.

A second circular recess 148 on the upper surface of lower plate 150 of hydraulic swivel coupling 128 is in fluid communication with circular recess 146 in the bottom of upper plate 144, and is also concentric with swivel axis 118. When upper plate 144 is swiveled with respect to lower plate 150, circular recess 146 remains in fluid communication with circular recess 148 and thereby provides a continuous path of fluid flow there between regardless of the relative angular positions of the upper plate with respect to the lower plate about swivel axis 118.

A second port 152 extends through lower plate 150 and intersects circular recess 148. The lower portion of hydraulic line 124 is coupled to port 142. In this manner, hydraulic fluid can be carried continuously from the upper portion of hydraulic line 124 coupled to the cylinder through the swivel connection to the lower portion of hydraulic line 124, through ports 142 and 152 and thence to valve 130 regardless of the relative swivel position of upper plate 144 versus lower plate 150 with respect to swivel axis 118.

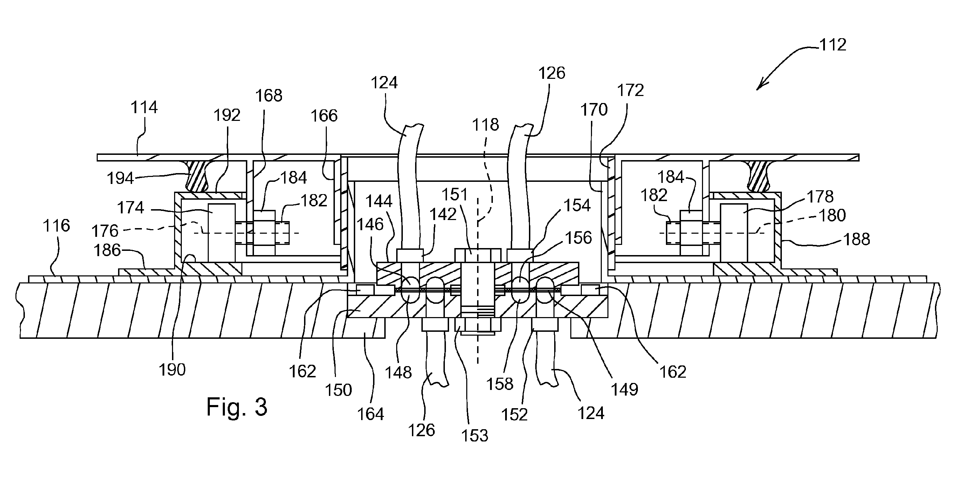

A thin gasket 149 is inserted between upper plate 144 and lower plate 150 to prevent fluid from leaking out of the circular recesses, or from one pair of recesses to the adjacent pair of recesses. A bolt 151 (Fig. 3) extends through a central hole in plates 144, 150 and is secured thereto with nut 153 (Fig. 3).

A similar arrangement is provided for fluid communication between the upper portion of hydraulic line 126 that is coupled to and between hydraulic cylinder 108 and upper plate 144 and the lower portion of hydraulic line 126 which is coupled to and between hydraulic valve 130 and lower plate 150. The upper portion of hydraulic line 126 is coupled to a port 154 on upper plate 144.

Port 154 is in fluid communication with circular recess 156 in the lower surface of upper plate 144. Circular recess 158 in the upper surface of lower plate 150 is aligned with circular recess 156 , which is in fluid communication with port 160. Hydraulic fluid is readily conducted from hydraulic cylinder 108, through the upper portion of hydraulic line 126, through ports 154 and 160, and thence to valve 130 regardless of the relative rotational positions of upper plate 144 with respect to lower plate 150 about swivel axis 118.

Bolts 162 extend downward through holes in lower plate 150 and are threaded into circular flange 164 which extends into aperture 140.

Hydraulic lines 124 and 126 pass completely through the apertures in the middle of seat swivel 112. To provide these apertures, the means of supporting swivel in position and permitting it to swivel about axis 118 are not disposed of very center of seat swivel 112, but are distributed further outward from that axis.

Referring now to Figure 3, top plate 114 has a central aperture 120. Two circular extending flanges, an inner flange 166, and an outer flange 168 with a greater diameter than inner flange 166 are fixed to and extend downward from the bottom surface of top plate 114.

Bottom plate 116 also has a central aperture 122 that is aligned with central aperture 120 of top plate 114. A circular flange 170 is fixed to and extends upward from the top surface of bottom plate 116. Circular flange 170 has a slightly smaller diameter than circular flange 166 such that flange 170 can be received inside tube 166. A cylindrical bushing or bearing 172 is disposed between circular flange 166 and circular flange 170 to act as a shim and take up any excess tolerances in the joint between flanges 166 and 170. Bearing 172 is preferably made of a dense polymeric material such as polytetrafluoroethylene (PTFE), high molecular weight polyethylene, or polypropylene. Bushing 172 is press fit on inner circular flange 166. Bushing 172 prevents the lateral movement (i.e. any movement in a direction perpendicular to axis 118) of top plate 114 with respect to bottom plate 116 of swivel 112.

A plurality of rollers (preferably three as shown here, or more) are fixed to cylindrical tube 168 to rotate about axes that are perpendicular to and intersect swivel axis 118. Roller 174 rotates about axis 176 and roller 178 rotates about axis 180. The third roller in this arrangement is not illustrated in the figures. It is disposed 120° away from roller 174 about axis 118 and 120° away from roller 178 about axis 118. Rollers 174 and 178 are disposed 120° away from each other about axis 118.

Each of the three rollers are supported on shafts 182 which extend through apertures in cylindrical tube 168, and are secured to cylindrical tube 168 with nuts 184.

Top plate 114 is secured to bottom plate 116 by two semicircular tracks 186, 188. These tracks extend in a semicircle about axis 118 and have a "C"-shaped profile in cross-section, as best shown in Figure 3. The tracks are attached to the assembly after the top plate 114 and the bottom plate 116 are assembled. They act as a race for the rollers and as a retainer to hold the top plate 114 and bottom plate 116 together and protect the rollers from corrosion and debris. The lower arm of the "C" is a track 190 on which the rollers roll. This track supports the weight of top plate 114 and all the components mounted on it. The upper arm 192 of the "C" extends across the top of the rollers and prevents the rollers and the top plate (to which they are coupled) from being lifted upward and off bottom plate 116. A circular wiper 194, preferably made out of a flexible material such as rubber, is fixed to the underside of plate 114 to abut the top of tracks 186, 188 and keep out dirt.

More than three rollers may be employed. Instead of rollers, a circular thrust bearing may be used. The swivel joints in the hydraulic lines can be replaced with individual swivel joints, one disposed in line 124 and one disposed in line 126. In this arrangement, twisting within each hydraulic line 124, 126 would be eliminated, but the hydraulic lines 124, 126 would twist about each other when the operator swiveled the seat. Since the seat in most work vehicles is designed to swivel no more than approximately 180°, this would, at best, twist hydraulic lines 124, 126 together by about 180°. The embodiment illustrated above, however, prevents any twisting of the hydraulic lines together. The coupling need not be fixed to the floor. The coupling (or couplings if one is provided on each hydraulic line) may be permitted to float, supported only by the hydraulic lines that they couple together.

## Claims

1. A swiveling seat (100) for a work vehicle, comprising:
an operator seat having a pedestal (110); and
a seat swivel (112) having a top plate (114) on which the pedestal (110) is fixed and a bottom plate (116), wherein the top and bottom plates (114, 116) are configured to swivel with respect to each other about a swivel axis (118),
**characterized in that** the seat swivel (112) has a central aperture (120, 122) through which the swivel axis (118) extends;
and that at least one hydraulic line (124) extends through the central aperture (120, 122), the at least one hydraulic line (124, 126) including a first hydraulic swivel joint.

2. The swiveling seat (100) of claim 1, further comprising a second hydraulic line (126) extending through the central aperture, the second hydraulic line further including a second hydraulic swivel joint.

3. The swiveling seat (100) of claim 1, wherein the first hydraulic swivel joint is configured to let ends of the at least one hydraulic line (124) swivel with respect to one another when the top plate (114) swivels with respect to the bottom plate (116).

4. The swiveling seat (100) of claim 2, wherein the second hydraulic swivel joint is configured to let ends of the second hydraulic line (126) swivel with respect to one another when the top plate (114) swivels with respect to the bottom plate (116).

5. The swiveling seat (100) of claim 2, wherein the first and second hydraulic swivel joints are coupled together to prevent the at least one hydraulic line (124) and the second hydraulic line (126) from twisting about each other.

6. The swiveling seat (100) of claim 2, wherein the first and second hydraulic swivel joints are formed in a single unit having four ports, of which two ports are disposed in an upper plate (144) of the unit and two ports are disposed in a lower plate (150) of the unit.

7. The swiveling seat (100) of claim 6, wherein ports on the upper plate (144) communicate with ports on the lower plate (150) through aligned circular recesses in abutting faces of the two plates (144, 150).
